# EUROPÄISCHE PATENTSCHRIFT

(11) **EP 0 785 120 B1**
(45) Veröffentlichungstag und Bekanntmachung des Hinweises auf die Patenterteilung: **18.04.2001**
(21) Anmeldenummer: 97100658.0
(22) Anmeldetag: 17.01.1997
(51) Int. Cl.: B60T 13/74

(54) **Bremsanlage für ein Kraftfahrzeug**
Brake installation for a motor vehicle
Installation de freinage pour un véhicule à moteur

(30) Priorität: 20.01.1996 DE 19601983
(43) Veröffentlichungstag der Anmeldung: 23.07.1997
(73) Patentinhaber: Continental Aktiengesellschaft, 30165 Hannover (DE)
(72) Erfinder: Maron, Christof Dr., 30989 Gehrden (DE); Prinzler. Hubertus, 30853 Langenhagen (DE); Dieckmann, Thomas Dr., 30982 Pattensen (DE)

(56) Entgegenhaltungen:
- EP-A- 0 275 783
- DE-C- 3 410 006
- US-A- 5 103 941

## Beschreibung

Die Erfindung betrifft eine elektrische Bremsanlage für ein Kraftfahrzeug, insbesondere für einen Pkw, die zumindest über folgendes verfügt:
- ein Bremspedal, an dem ein von einer Fußkraft abhängiges elektrisches Bremssignal erzeugbar ist;
- eine Radbremse für jedes Rad des Kraftfahrzeuges, der jeweils ein Elektromotor mit einer Zuspannvorrichtung zugeordnet ist, die auf die jeweilige Radbremse eine dem elektrischen Signal entsprechende Zuspannkraft ausübt, wodurch an dem Rad eine Bremskraft erzeugt wird;
- eine Feststellbremsfunktion für mindestens ein Rad des Kraftfahrzeuges.
Die Erfindung betrifft ferner ein Verfahren zum Feststellen einer derartigen elektrischen Bremsanlage.

Elektrische Bremsanlagen der oben genannten Art sind an sich, z.B. aus der DE-PS 34 10 006 bereits bekannt. In der genannten Druckschrift wird eine Bremsanlage für ein Kraftfahrzeug mit einem elektrischen Bremssystem für alle Räder vorgestellt. Wird von dem Fahrer des Kraftfahrzeuges eine Fußkraft auf das Bremspedal ausgeübt, so wird der durch diese Fußkraft kundgegebene Bremswunsch von einem Bremssignalgeber in ein entsprechendes elektrisches Signal umgewandelt. Entsprechend dem elektrischen Signal werden Elektromotoren in Gang gesetzt, die jeder Radbremse zugeordnet sind. Jeder Elektromotor versetzt wiederum einen Kolben in axiale Bewegung, der infolge der Bewegung die Bremsbacke an die Bremsscheibe anpreßt, wodurch an dem Rad letztendlich eine Bremskraft erzeugt wird. Die aus der DE-PS 34 10 006 bekannte Bremsanlage enthält neben dem ersten elektrischen Bremssystem ein zweites Bremssystem, mit Hilfe dessen über das gemeinsame Bremspedal z.B. mechanisch eine Bremskraft auf die Räder mindestens einer Fahrzeugachse übertragen werden kann. Das zweite Bremssystem ist von dem elektrischen Bremssystem unabhängig und entfaltet seine volle Wirkung bei einer Störung oder bei einem Ausfall des elektrischen Bremssystems, so daß das Kraftfahrzeug auch in diesem Fall sicher abgebremst werden kann. Das zweite Bremssystem wird mit Hilfe von Seilzügen realisiert und kann in bekannter Art und Weise auch eine Feststellbremsfunktion übernehmen, indem es mit einem einrastbaren Hebel in einer bestimmten Stellung arretiert wird.

Die aus der DE-PS 34 10 006 bekannte Bremsanlage ist als sicher zu bezeichnen, da das elektrische Bremssystem von dem mechanischen Bremssystem unabhängig ist. Insbesondere kann die Feststellbremsfunktion die Sicherheit des elektrischen Bremssystems nicht negativ beeinflussen, da die Feststellbremsfunktion von dem mechanischen Bremssystem übernommen wird. Mechanische Bremssysteme erfordern jedoch einen hohen Wartungsaufwand. Darüber hinaus entsteht durch das mechanische Bremssystem zusätzliches Gewicht, was der Zielsetzung der Gewichtsreduzierung im modernen Kraftfahrzeugbau entgegengesetzt ist.

Der Erfindung liegt die Aufgabe zugrunde, die Feststellbremsfunktion in das elektrische Bremssystem zu integrieren, so daß auf ein separates, insbesondere mechanisches Bremssystem verzichtet werden kann. Durch die Integration der Feststellbremsfunktion soll die Sicherheit des elektrischen Bremssystems nicht beeinträchtigt werden. Der Erfindung liegt ferner die Aufgabe zugrunde, ein Verfahren zum Feststellen einer elektrischen Bremsanlage vorzustellen.

Gemäß den kennzeichnenden Merkmalen des Anspruchs 1 wird die Aufgabe dadurch gelöst, daß die Feststellbremsfunktion mittels einer elektrischen Feststellbremse realisiert ist, die in einem ersten stromführenden Zustand eine Bewegung der Zuspannvorrichtung ungestört läßt und in einem zweiten stromlosen Zustand über eine Reibungserhöhung zu einer Selbsthemmung der Zuspannvorrichtung führt, so daß die Zuspannvorrichtung bei einer bestimmten Zuspannkraft feststellbar ist, wobei die durch die Reibungserhöhung entstehende Reibungskraft von dem Elektromotor überwindbar ist.

Gemäß dem nebengeordneten Verfahrensanspruch 5 wird eine elektrische Bremsanlage nach Anspruch 1 durch die folgenden Verfahrensschritte festgestellt:
a) Beaufschlagen mindestens eines Rades des Kraftfahrzeuges mit einer Bremskraft durch Erzeugen einer definierten Zuspannkraft an der entsprechenden Radbremse, währenddessen sich die dem Rad zugeordnete elektrische Feststellbremse in dem ersten stromführenden Zustand befindet
b) Überführen der elektrischen Feststellbremse in den zweiten stromlosen Zustand, so daß auf die Zuspannvorrichtung so lange eine erhöhte Reibung ausgeübt wird, bis die elektrische Feststellbremse wieder in den ersten stromführenden Zustand versetzt wird, wodurch die in dem Verfahrensschritt a) erzeugte Zuspannkraft im wesentlichen erhalten bleibt und das Rad festgestellt ist.

Der Grundgedanke der Erfindung ist darin zu sehen, daß mit der elektrischen Feststellbremse die innere Reibung in der Radbremse gezielt erhöht wird, so daß eine Selbsthemmung der Radbremse bereits bei einer Zuspannkraft eintritt, die zur Feststellung des Rades ausreichend ist.

Die Vorteile der Erfindung sind insbesondere darin zu sehen, daß die Feststellbremsfunktion vollständig in das elektrische Bremssystem integriert ist, so daß das elektrische Bremssystem inklusive der Feststellbremse wartungsfrei ist. Dabei wird die Sicherheit des elektrischen Bremssystems nicht beeinträchtigt, da die durch die elektrische Feststellbremse erzeugte Reibungskraft von dem Elektromotor überwunden werden kann und somit eine Bewegung der Zuspannvorrichtung auch bei "angezogener" Feststellbremse (z.B. bei Funktionsausfall) möglich ist. Ein weiterer Vorteil der Erfindung ist darin zu sehen, daß jedes Rad des Kraftfahrzeuges mit einem geringen Mehraufwand am elektrischen Bremssystem feststellbar ist. Darüber hinaus weist die elektrische Feststellbremse eine elektrische Schnittstelle zum Bremssystem auf, so daß die Feststellung nicht mehr zwangsläufig durch den Kraftfahrzeugfahrer erfolgen muß, sondern durch elektrisch gesteuerte übergeordnete Systeme eingeleitet werden kann. Beispielsweise ist es möglich, die Feststellbremsfunktion mit einer Diebstahlsicherung derart zu verbinden, daß ein "Lösen" der Feststellbremse automatisch nur dann erfolgt, wenn zuvor ein richtiger Code in eine dafür vorgesehene Vorrichtung eingegeben wurde.

Gemäß dem Anspruch 2 ist die elektrische Feststellbremse als elektromagnetische Reibungsrutschkupplung ausgebildet, die einen besonders einfachen Aufbau aufweist und somit preiswert in der Herstellung ist.

Gemäß einem bevorzugten Ausführungsbeispiel der Erfindung nach Anspruch 3 verfügen die Radbremsen der Vorderachse über eine elektrische Feststellbremse. Dies ist besonders vorteilhaft, da man üblicherweise auf der Vorderachse eine hohe Achslast hat und somit eine gute Feststellung der Vorderräder erreichbar ist. Darüber hinaus steht an der Vorderachse üblicherweise mehr Bauraum für den Einbau der Elektromotoren zur Verfügung, so daß diese größer und somit leistungsstärker ausgebildet werden können, was bessere Notbremseigenschaften bei einer ausgefallenen Feststellbremse zur Folge hat.

Gemäß einer Weiterbildung der Erfindung nach Anspruch 4 verfügen zusätzlich die Räder der Hinterachse jeweils über eine elektrische Feststellbremse, so daß alle vier Räder des Kraftfahrzeuges festgestellt werden können und somit eine besonders wirkungsvolle Feststellung des Kraftfahrzeuges erreicht wird.

Gemäß einer Weiterbildung des nebengeordneten Anspruchs 5 wird die Beaufschlagung des festzustellenden Rades des Kraftfahrzeuges mit einer Bremskraft durch Betätigung des Bremspedals vorgenommen. Ferner erfolgt die Überführung der elektrischen Feststellbremse in den zweiten stromlosen Zustand vorzugsweise bei Abstellung des Motors des Kraftfahrzeuges automatisch.

Zusammenfassend ist festzustellen, daß durch die Erfindung die Feststellbremsfunktion vollständig in das elektrische Bremssystem wirkungsvoll integrierbar ist, wobei der Mehraufwand im elektrischen Bremssystem gering ist und die Sicherheit des elektrischen Bremssystems nicht eingeschränkt ist.

Ein Ausführungsbeispiel und weitere Vorteile der Erfindung werden im Zusammenhang mit den nachstehenden Figuren erläutert, darin zeigt:
- Fig. 1: eine schematische Figur einer elektrischen Bremsanlage,
- Fig. 2a: eine Radbremse mit gelöster elektrischer Feststellbremse,
- Fig. 2b: eine Radbremse mit angezogener elektrischer Feststellbremse,
- Fig. 3: ein Diagramm.

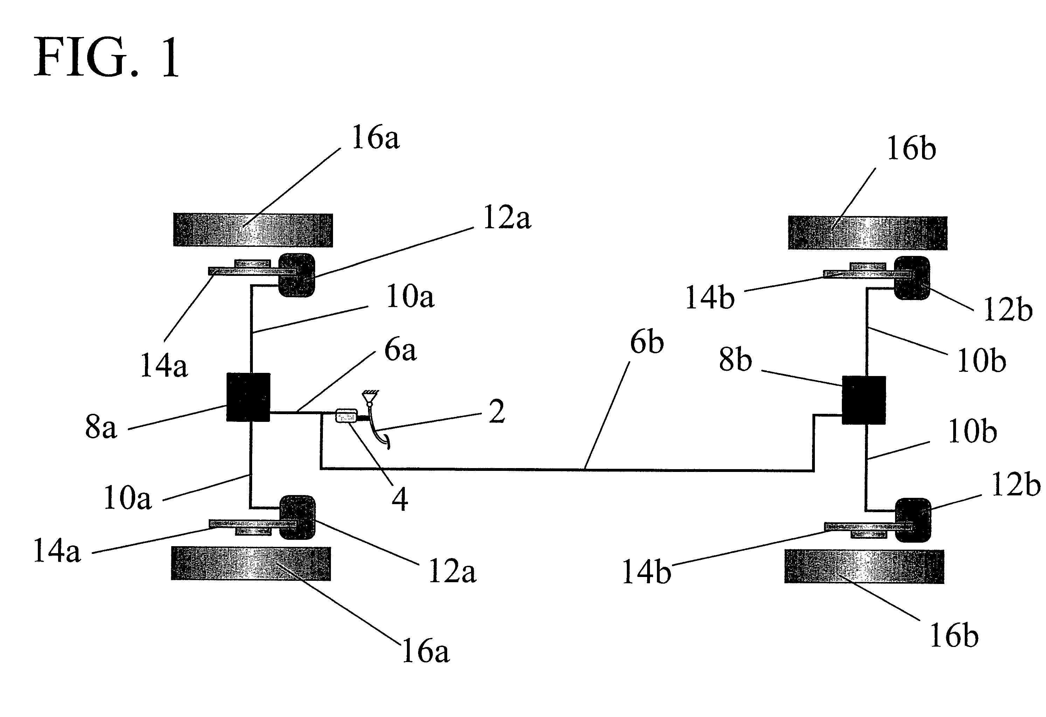

Fig. 1 zeigt schematisch ein elektrisches Bremssystem für ein Kraftfahrzeug, wobei nur die für die nachfolgenden Erläuterungen notwendigen Bestandteile dargestellt sind. Auf das Bremspedal 2 kann eine dem Bremswunsch des Kraftfahrzeugfahrers entsprechende Fußkraft aufgebracht werden, durch die das Bremspedal 2 bewegt wird. Der zurückgelegte Weg des Bremspedals 2 wird mittels eines Sensors 4 in ein elektrisches Signal umgewandelt, der dem Bremswunsch des Fahrers entspricht. Das elektrische Signal wird über die elektrischen Leitungen 6a und 6b an die Elektronikeinheiten 8a und 8b weitergeleitet. Dort werden aus dem elektrischen Bremssignal Steuersignale erzeugt, die über die elektrischen Leitungen 10a bzw. 10b zu den Radbremsen 12a bzw. 12b weitergeleitet werden. Die Radbremsen 12a bzw. 12b werden entsprechend den Steuersignalen aktiviert, was im Ergebnis dazu führt, daß die in den Radbremsen 12a bzw. 12b enthaltenen Bremsbeläge gegen die Bremsscheiben 14a bzw. 14b angepreßt werden, wodurch an den Bremsscheiben 14a bzw. 14b und damit an den Rädern 16a bzw. 16b eine Bremskraft entsteht.

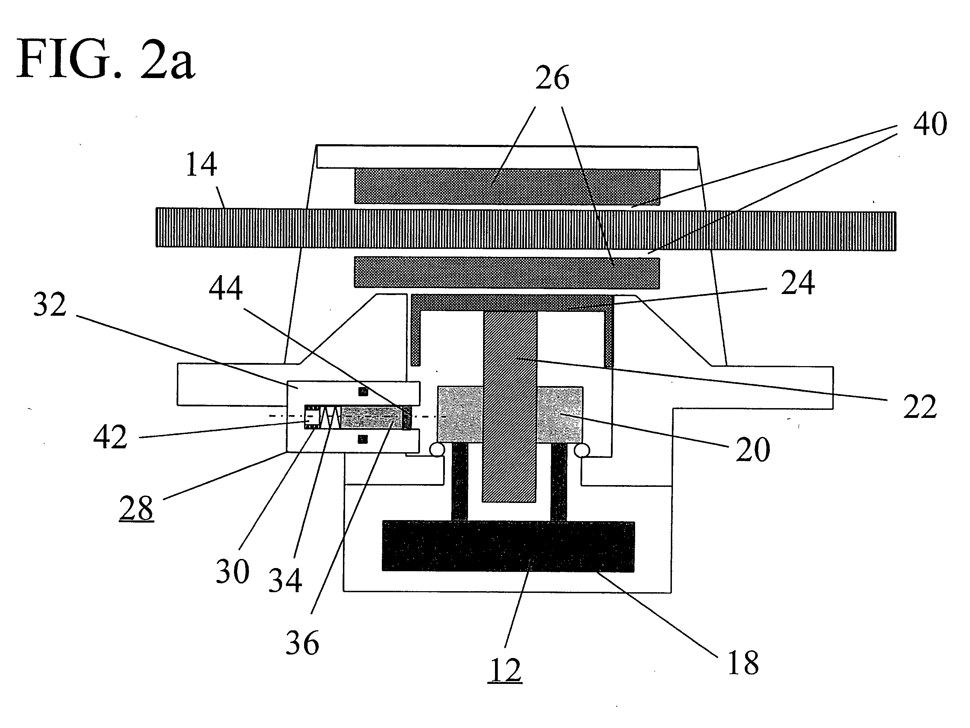

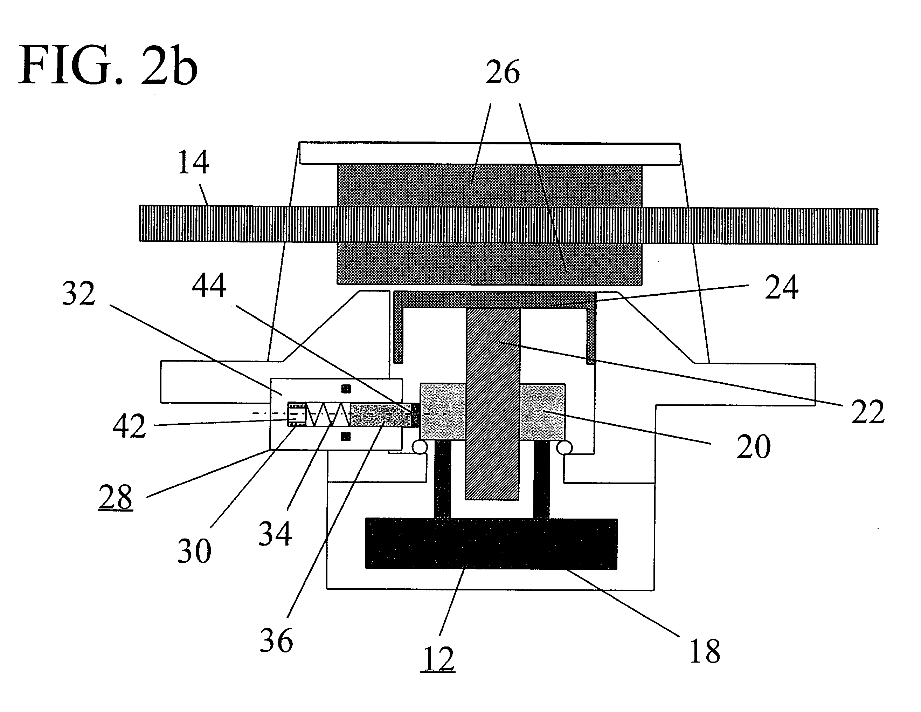

Im Zusmamenhang mit der Fig. 2 wird im folgenden erläutert, wie eine Radbremse 12 auf eine Bremsscheibe 14 einwirkt und wie die Radbremse 12 mit Hilfe einer elektrischen Feststellbremse 28 festgestellt werden kann. In Fig. 2 sind ebenfalls in schematischer Darstellung nur die für die folgenden Erläuterungen notwendigen Bestandteile gezeigt. Die Radbremse 12 enthält einen Elektromotor 18, mit Hilfe dessen die Spindelmutter 20 in eine Drehbewegung um eine Achse versetzt werden kann, die durch die Spindel 22 vorgegeben ist. Die Drehbewegung der Spindelmutter 20 bewirkt eine axiale Bewegung der Spindel 22 und eine axiale Bewegung des Bremskolbens 24. Dadurch werden bei einem Bremsvorgang die mit dem Kolben 24 in Wirkverbindung stehenden Bremsbeläge 26 ebenfalls in eine axiale Bewegung versetzt, so daß die Bremsbeläge 26 schließlich nach Durchlaufen des
Luftspaltes 40 an der Bremsscheibe 14 anliegen und eine Bremskraft hervorrufen. Die Bremskraft ist abhängig von der Zuspannkraft, die von der Spindel 22 auf den Bremskolben 24 und damit auf die Bremsbeläge 26 ausgeübt wird. Nach einem Bremsvorgang werden die Bremsbeläge 26, der Bremskolben 24 und die Spindel 22 durch Rückstellkräfte in ihre Ausgangslage zurückbewegt. Diese Rückbewegung ist aufgrund der zu vernachlässigenden Reibung in der Radbremse 12 möglich.

Die Radbremse 12 enthält neben den bisher erläuterten Bestandteilen eine elektrische Feststellbremse 28, mit Hilfe der die Radbremse 12 und damit die Bremsscheibe 14 festgestellt werden kann. Die elektrische Feststellbremse 28 kann beispielsweise als elektromagnetische Reibungsrutschkupplung ausgebildet sein. In diesem Fall befindet sich in dem Gehäuse 32 der elektrischen Feststellbremse 28 ein Elektromagnet, angedeutet durch die leitende Spule 30, die um einen Metallkern 42 gewickelt ist. Die elektrische Feststellbremse 28 enthält darüber hinaus einen Metallstift 36 mit einem Reibkopf 44, der in axialer Richtung beweglich in dem Gehäuse 32 gelagert ist. Zwischen dem Metallkern 42 und dem Metallstift 36 befindet sich eine Andruckfeder 34.

Fig. 2a zeigt eine Radbremse 12 mit "gelöster" Feststellbremse 28. Der "gelöste" Zustand der elektrischen Feststellbremse 28 wird durch Anlegen einer elektrischen Spannung an die leitende Spule 30 erreicht, infolgedessen ein Strom durch die leitende Spule 30 getrieben wird. Der Elektromagnet entfaltet seine Wirkung und der Metallstift 36 wird von dem Elektromagneten in das Gehäuse 32 gezogen. Hierbei wird die Federkraft der Andruckfeder 34 überwunden. In dem "gelösten" Zustand behindert die elektrische Feststellbremse 28 nicht die Bewegung der Spindelmutter 20.

Fig. 2b zeigt eine Radbremse 12 in festgestelltem Zustand, der wie folgt erreicht wird. Zunächst wird die Radbremse 12 bei "gelöster" elektrischer Feststellbremse (s.Fig. 2a) betätigt, bis die Bremsbeläge 26 an der Bremsscheibe 14 anliegen. Unter Beibehaltung dieses Zustands wird die elektrische Feststellbremse 28 von dem ersten stromführenden Zustand (s.Fig. 2a) in den zweiten stromlosen ("angezogenen") Zustand überführt. Die Wirkung des Elektromagneten ist dann aufgehoben und der Metallstift 36 mit dem Reibkopf 44 wird durch die Andruckfeder 34 gegen die Spindelmutter 20 gepreßt. Durch den Anpreßdruck des Metallstiftes 36 an der Spindelmutter 20 entsteht eine Reibungskraft, die höher ist als die Rückstellkraft der Bremsbeläge 26 bzw. der Spindel 22. Dies führt dazu, daß die Bremsbeläge 26 auch bei nichtangetriebenem Elektromotor 18 in ihrer Position fixiert werden und somit die Bremsscheibe 14 feststellen. Dieser durch die "angezogene" Feststellbremse 28 erzeugte Zustand wird allgemein als Selbsthemmung bezeichnet.

Andererseits ist die durch den Metallstift 36 erzeugte Reibungskraft an der Spindelmutter 20 so gewählt, daß sie von dem Elektromotor 18 überwunden werden kann. Somit ist eine Bewegung der Spindelmutter 20 und damit der Spindel 22 auch bei "angezogener" elektrischer Feststellbremse 28 durch den Elektromotor 18 möglich.

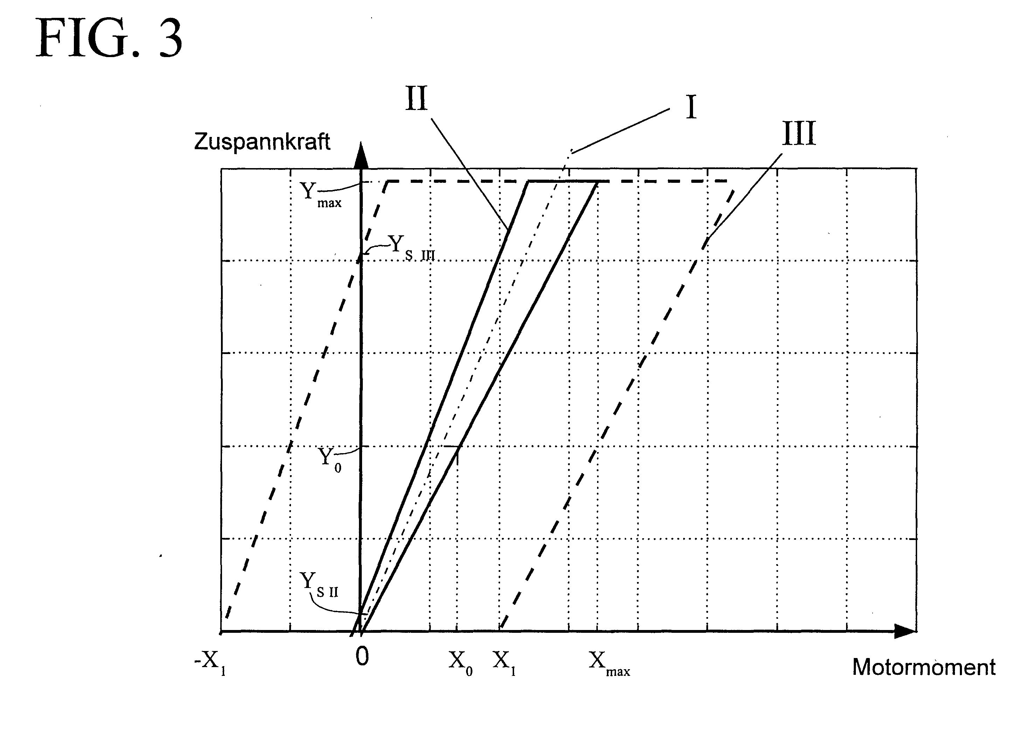

Fig. 3 zeigt die oben erläuterten Zusammenhänge qualitativ in einem Diagramm, in dem die auf die Bremsscheibe 14 ausgeübte Zuspannkraft über dem von dem Elektromotor 18 ausgeübten Motormoment aufgetragen ist. In das Diagramm ist eine Kennlinie I für eine ideale Radbremse eingezeichnet, also für eine Radbremse, in der die Reibung identisch null ist. In diesem Fall bewirkt eine Steigerung des Motormoments um einen Betrag 1 eine Zunahme der Zuspannkraft um einen Betrag 2 und eine Zurücknahme des Motormoments um den Betrag 1 eine Verringerung der Zuspannkraft um den Betrag 2.

Die Kennlinie II gibt die Verhältnisse für eine reale Radbremse mit geringer innerer Reibung wieder, wenn sich die elektrische Feststellbremse im stromführenden Zustand befindet. Bei einem Bremsvorgang wird von dem Elektromotor beispielsweise ein Motormoment x₀ ausgeübt, was an der Radbremse zu einer Zuspannkraft y₀ führt. Bei Beendigung des Bremsvorganges, d.h. bei Rückführung des Motormoments auf Null, sinkt die Zuspannkraft von dem Wert y₀ auf den Wert y_{SII}, also auf denjenigen Wert, der durch den Schnittpunkt der Kennlinie II mit der y-Achse vorgegeben ist. Bei dieser verbleibenden Zuspannkraft y_{sII} befindet sich die Rückstellkraft der Radbremse mit der inneren Reibungskraft im Gleichgewicht. Bei der Zuspannkraft y_{sII} tritt also eine Selbsthemmung ein. Eine vollständige Freistellung der Radbremse (Zuspannkraft = 0) ist nur unter Einwirkung eines negativen Motormoments möglich. Der erläuterte Vorgang wird allgemein als mechanische Hysterese bezeichnet.

Die Kennlinie III gibt die Verhältnisse wieder, wenn sich die elektrische Feststellbremse im stromlosen Zustand befindet und der Metallstift 36 an der Spindelmutter 20 anliegt (vergl. Fig. 2b). Die Kennlinie III ist gegenüber der Kennlinie II aufgrund der Reibungszunahme in der Radbremse stark verbreitert und eine Selbsthemmung der Radbremse tritt zwischen den Werten O und y_{sIII} ein. Im folgenden wird die Feststellung eines Rades mit Hilfe des Diagramms erläutert. Es wird zunächst auf den Fall eingegangen, daß das Rad mit maximaler Zuspannkraft festgestellt wird, die durch den Wert y_{sIII} (dem Schnittpunkt der Kennlinie III mit der y-Achse) vorgegeben ist.

Dazu wird zunächst bei stromführendem Zustand der elektrischen Feststellbremse (Kennlinie II) ein Motormoment derart erzeugt, daß die hervorgerufene Zuspannkraft größer oder gleich der Zuspannkraft y_{sIII} ist. Unter Beibehaltung des erzeugten Motormoments wird die elektrische Feststellbremse in ihren stromlosen Zustand überführt, so daß sich die Reibung in der Radbremse gegenüber dem stromführenden Zustand deutlich erhöht (Kennlinie III). Danach wird das Motormoment auf O zurückgeführt und die erzeugte Zuspannkraft sinkt auf den Wert y_{sIII}. Ein weiteres Absinken unter diesen Wert tritt nicht ein, da sich bei der Zuspannkraft y_{sIII} die Rückstellkraft der Radbremse mit der durch die elektrische Feststellbremse ausgeübten Reibungskraft im Gleichgewicht befindet und somit eine Selbsthemmung der Radbremse eintritt.

Im folgenden wird der Fall erläutert, daß das Rad mit einer Zuspannkraft zwischen O und y_{sIII} festgestellt wird. Dazu wird bei stromführendem Zustand der elektrischen Feststellbremse (Kennlinie II) ein Motormoment derart erzeugt, daß die hervorgerufene Zuspannkraft zwischen O und y_{sIII} liegt. Unter Beibehaltung des erzeugten Motormoments wird die elektrische Feststellbremse in ihren stromlosen Zustand überführt, so daß sich die Reibung in der Radbremse gegenüber dem stromführenden Zustand erhöht (Kennlinie III).

Danach wird das Motormoment auf O zurückgeführt, wobei die erzeugte Zuspannkraft vollständig erhalten bleibt, da in dem genannten Bereich die Rückstellkraft bereits niedriger ist als die durch die elektrische Feststellbremse ausgeübte Reibungskraft und auch eine teilweise Rückstellung der Radbremse nicht möglich ist.

Schließlich wird im Zusammenhang mit der Fig. 3 erläutert, was bei einem Funktionsausfall der elektrischen Feststellbremse (darunter ist ein unkontrollierter Übergang der Feststellbremse in den stromlosen "angezogenen" Zustand und ein Verbleiben in diesem Zustand zu verstehen) passiert. In diesem Fall ist nur noch die Kennlinie III relevant, da ein gezieltes Überführen der elektrischen Feststellbremse von dem stromlosen in den stromführenden Zustand bzw. umgekehrt nicht mehr möglich ist. Fällt die elektrische Feststellbremse aus, wenn an dem entsprechenden Rad eine Zuspannkraft von O anliegt, so ist der Kennlinie III zu entnehmen, daß die Zuspannkraft so lange identisch O bleibt, wie sich das Motormoment zwischen den Werten O und x₁ befindet. Das Motormoment x₁ wird also zur Überwindung der ausgeübten Reibungskraft benötigt. Erst wenn das Motormoment den Betrag x₁ übersteigt, wird auf das entsprechende Rad eine Zuspannkraft ausgeübt. Damit bei einer ausgefallenen elektrischen Feststellbremse dennoch eine Zuspannkraft auf das entsprechende Rad ausgeübt werden kann, ist der Elektromotor so ausgelegt, daß das maximale
Motormoment xₘₐₓ größer ist als das Motormoment x₁.
Somit kann der Momentenbereich zwischen x₁ und xₘₐₓ für eine Notbremsung bei einer ausgefallenen elektrischen Feststellbremse genutzt werden. Die Notbremsfunktion kann umso besser ausgeübt werden, je deutlicher der Wert xₘₐₓ den Wert x₁ übersteigt.

Liegt bei einem Funktionsausfall der elektrischen Feststellbremse an dem entsprechenden Rad hingegen eine Zuspannkraft Y_{SIII} an, so ist der Kennlinie III zu entnehmen, daß das entsprechende Rad unter Aufwendung des negativen Motormoments x₁ freigestellt werden kann (Zuspannkraft = O). Der Elektromotor der Radbremse ist also so auszulegen, daß dieses negative Motormoment erzeugt werden kann. Es sei bemerkt, daß die Motormomente -x₁ und x₁ vom Betrag her gleich sind, da sie durch die von der elektrischen Feststellbremse erzeugten Reibungskraft bestimmt sind.

In den beiden letzten Absätzen ist der Funktionsausfall der elektrischen Feststellbremse bei den Extremwerten (Zuspannkraft = O bzw. Zuspannkraft = YsIII) erläutert worden. Liegt an der entsprechenden Radbremse bei Funktionsausfall der elektrischen Feststellbremse eine Zuspannkraft an, die zwischen 0 und Y_{sIII} liegt, so ist eine Freistellung des entsprechenden Rades unter Aufwendung eines Motormomentes möglich, das zwischen 0 und -x₁ liegt.

### Bezugszeichenliste

- 2: Bremspedal
- 4: Sensor
- 6a,b: elektrische Leitungen
- 8a,b: Elektronikeinheiten
- 10a,b: elektrische Leitungen
- 12a,b: Radbremse
- 14a,b: Bremsscheibe
- 16a,b: Räder
- 18: Elektromotor
- 20: Spindelmutter
- 22: Spindel
- 24: Bremskolben
- 26: Bremsbelag
- 28: elektrische Feststellbremse in Form einer elektrischen Reibungsrutschkupplung
- 30: Spule
- 32: Gehäuse der Reibungsrutschkupplung
- 34: Andruckfeder
- 36: Metallstift mit Reibkopf
- 40: Luftspalt
- 42: Metallkern
- 44: Reibkopf

## Patentansprüche

1. Elektrische Bremsanlage für ein Kraftfahrzeug, insbesondere für einen Pkw, die zumindest über folgendes verfügt:
- ein Bremspedal (2), an dem ein von einer Fußkraft abhängiges elektrisches Bremssignal erzeugbar ist;
- eine Radbremse (12) für jedes Rad (16) des Kraftfahrzeuges, der jeweils ein Elektromotor (18) mit einer Zuspannvorrichtung (20, 22) zugeordnet ist, die auf die jeweilige Radbremse (12) eine dem elektrischen Signal entsprechende Zuspannkraft ausübt, wodurch an dem Rad (16) eine Bremskraft erzeugt wird;
- eine Feststellbremsfunktion für mindestens ein Rad (16) des Kraftfahrzeuges,
**dadurch gekennzeichnet**,
daß die Feststellbremsfunktion mittels einer elektrischen Feststellbremse (28) realisiert ist, die in einem ersten stromführenden Zustand eine Bewegung der Zuspannvorrichtung (20, 22) ungestört läßt und in einem zweiten stromlosen Zustand über eine Reibungserhöhung zu einer Selbsthemmung der Zuspannvorrichtung (20, 22) führt, so daß die Zuspannvorrichtung (20, 22) bei einer bestimmten Zuspannkraft feststellbar ist, wobei die durch die Reibungserhöhung entstehende Reibungskraft von dem Elektromotor (18) überwindbar ist.

2. Bremsanlage für ein Kraftfahrzeug nach Anspruch 1, dadurch gekennzeichnet, daß die elektrische Feststellbremse (28) als elektromagnetische Reibungsrutschkupplung (28) ausgebildet ist.

3. Bremsanlage für ein Kraftfahrzeug nach einem der Ansprüche 1 bis 2, dadurch gekennzeichnet, daß die Radbremsen (12) der Vorderachse über eine elektrische Feststellbremse verfügen.

4. Bremsanlage für ein Kraftfahrzeug nach einem der Ansprüche 1 bis 3, dadurch gekennzeichnet, daß zusätzlich die Radbremsen (12) der Hinterachse jeweils über eine elektrische Feststellbremse (28) verfügen.

5. Verfahren zum Feststellen einer elektrischen Bremsanlage für ein Kraftfahrzeug, insbesondere für einen Pkw, die zumindest über folgendes verfügt:
- ein Bremspedal (2), an dem ein von einer Bremskraft abhängiges elektrisches Bremssignal erzeugbar ist;
- eine Radbremse (12) für jedes Rad (16) des Kraftfahrzeuges, der jeweils ein Elektromotor (18) mit einer Zuspannvorrichtung (20, 22) zugeordnet ist, die auf die jeweilige Radbremse (12) eine dem elektrischen Signal entsprechende Zuspannkraft ausübt, wobei an dem Rad (16) eine Bremskraft erzeugt wird;
- eine elektrische Feststellbremse (28) für mindestens ein Rad (16) des Kraftfahrzeuges, die der Feststellung der Zuspannvorrichtung (20, 22) des dem Rad (16) zugeordneten Elektromotors (18) dient, und die in einem ersten stromführenden Zustand die Bewegung der Zuspannvorrichtung (20, 22) ungestört läßt und in einem zweiten stromlosen Zustand zu einer Selbsthemmung der Zuspannvorrichtung (20, 22) führt
nach folgenden Verfahrensschritten:
a) Beaufschlagen mindestens eines Rades (16) des Kraftfahrzeuges mit einer Bremskraft durch Erzeugen einer definierten Zuspannkraft an der entsprechenden Radbremse (12), währenddessen sich die dem Rad (16) zugeordnete elektrische Feststellbremse (28) in dem ersten stromführenden Zustand befindet
b) Überführen der elektrischen Feststellbremse (28) in den zweiten stromlosen Zustand, so daß auf die Zuspannvorrichtung (20, 22) so lange eine erhöhte Reibung ausgeübt wird, bis die elektrische Feststellbremse (28) wieder in den ersten stromführenden Zustand versetzt wird, wodurch die in dem Verfahrensschritt a) erzeugte Zuspannkraft im wesentlichen erhalten bleibt und das Rad (16) festgestellt ist.

6. Verfahren zum Feststellen einer elektrischen Bremsanlage für ein Kraftfahrzeug nach Anspruch 5, dadurch gekennzeichnet, daß die Beaufschlagung des festzustellenden Rades (16) des Kraftfahrzeuges mit einer Bremskraft durch Betätigung des Bremspedals (2) vorgenommen wird.

7. Verfahren zum Feststellen einer elektrischen Bremsanlage für ein Kraftfahrzeug nach einem der Ansprüche 5 bis 6, dadurch gekennzeichnet, daß die Überführung der elektrischen Feststellbremse (28) in den zweiten stromlosen Zustand vorzugsweise bei Abstellung des Motors des Kraftfahrzeuges automatisch erfolgt.

## Claims

1. Electrical braking system for an automotive vehicle, more especially for a passenger vehicle, which system has at least the following component parts:
- a brake pedal (2), at which an electrical braking signal, dependent on foot pressure, can be generated;
- a wheel brake (12) for each wheel (16) of the automotive vehicle, each wheel brake having associated therewith an electric motor (18) together with a tightening device (20, 22), which exerts on the respective wheel brake (12) a tightening force corresponding to the electrical signal, whereby a braking force is generated at the wheel (16); and
- a parking brake function for at least one wheel (16) of the automotive vehicle,
characterised in that the parking brake function is accomplished by means of an electrical parking brake (28) which, in a first current-carrying state, leaves a movement of the tightening device (20, 22) undisturbed and, in a second currentless state, leads to an automatic locking of the tightening device (20, 22) by way of an increase in friction, so that the tightening device (20, 22) is securable at a predetermined tightening force, whereby the frictional force, produced by the increase in friction, can be overcome by the electric motor (18).

2. Braking system for an automotive vehicle according to claim 1, characterised in that the electrical parking brake (28) is configured as an electromagnetic frictional sliding coupling (28).

3. Braking system for an automotive vehicle according to one of claims 1 to 2, characterised in that the wheel brakes (12) of the front axle have an electrical parking brake.

4. Braking system for an automotive vehicle according to one of claims 1 to 3, characterised in that the wheel brakes (12) of the rear axle each additionally have an electrical parking brake (28).

5. Method of securing an electrical braking system for an automotive vehicle, more especially for a passenger vehicle, which system has at least the following component parts:
- a brake pedal (2), at which an electrical braking signal, dependent on a braking force, can be generated;
- a wheel brake (12) for each wheel (16) of the automotive vehicle, each wheel brake having associated therewith an electric motor (18) together with a tightening device (20, 22), which exerts on the respective wheel brake (12) a tightening force corresponding to the electrical signal, a braking force being generated at the wheel (16); and
- an electrical parking brake (28) for at least one wheel (16) of the automotive vehicle, which brake serves to secure the tightening device (20, 22) of the electric motor (18) associated with the wheel (16), and which brake, in a first current-carrying state, leaves the movement of the tightening device (20, 22) undisturbed and, in a second currentless state, leads to an automatic locking of the tightening device (20, 22),
according to the following method steps:
a) applying a braking force to at least one wheel (16) of the automotive vehicle by generating a specific tightening force at the corresponding wheel brake (12), while the electrical parking brake (28), associated with the wheel (16), is situated in the first current-carrying state, and
b) transferring the electrical parking brake (28) into the second currentless state, so that an increased friction is exerted upon the tightening device (20, 22) for so long until the electrical parking brake (28) is reset into the first current-carrying state, whereby the tightening force, generated in method step a), is substantially maintained, and the wheel (16) is secured.

6. Method of securing an electrical braking system for an automotive vehicle according to claim 5, characterised in that the application of a braking force on the wheel (16) of the automotive vehicle to be secured is effected by actuating the brake pedal (2).

7. Method of securing an electrical braking system for an automotive vehicle according to one of claims 5 to 6, characterised in that transferring the electrical parking brake (28) into the second currentless state is preferably effected automatically when stopping the engine of the automotive vehicle.

## Revendications

1. Installation de freinage électrique pour un véhicule à moteur, en particulier pour un véhicule de tourisme, disposant au moins de ce qui suit ;
- une pédale de frein (2) sur laquelle peut être produit un signal de freinage électrique fonction d'une force exercée par le pied ;
- pour chaque roue (16) du véhicule à moteur, un frein (12) auquel est respectivement associé un moteur électrique (18) avec un dispositif de serrage (20, 22) qui exerce sur le frein respectif (12) de la roue une force de serrage correspondant au signal électrique, ce par quoi une force de freinage est produite sur la roue (6) ;
- une fonction de freinage d'immobilisation pour au moins une roue (16) du véhicule à moteur,
caractérisée par le fait
que la fonction de freinage d'immobilisation est réalisée au moyen d'un frein électrique d'immobilisation (28) qui, dans un premier état où le courant passe, autorise, sans le contrarier, un mouvement du dispositif de serrage (20, 22) et, dans un second état où le courant ne passe pas, conduit à un auto-blocage du dispositif de serrage (20, 22) par augmentation du frottement, de sorte que, pour une force de serrage déterminée, le dispositif de serrage (20, 22) peut être immobilisé, la force de frottement résultant de l'augmentation du frottement pouvant être surmontée par le moteur électrique (18).

2. Installation de freinage pour un véhicule à moteur selon la revendication 1, caractérisé par le fait que le frein électrique d'immobilisation (28) est conçu sous forme d'un accouplement électromagnétique glissant à frottement (28).

3. Installation de freinage pour un véhicule à moteur selon l'une des revendications 1 à 2, caractérisé par le fait que les freins (12) des roues de l'essieu avant disposent d'un frein électrique d'immobilisation.

4. Installation de freinage pour un véhicule à moteur selon l'une des revendications 1 à 3, caractérisé par le fait qu'en outre les freins (12) des roues de l'essieu arrière disposent chacun d'un frein électrique d'immobilisation (28).

5. Procédé d'immobilisation d'une installation de freinage électrique pour un véhicule à moteur, en particulier pour un véhicule de tourisme, disposant au moins de ce qui suit :
- une pédale de frein (2) ) sur laquelle peut être produit un signal de freinage électrique fonction d'une force de freinage ;
- pour chaque roue (16) du véhicule à moteur, un frein (12) auquel est respectivement associé un moteur électrique (18) avec un dispositif de serrage (20, 22) qui exerce sur le frein respectif (12) de la roue une force de serrage correspondant au signal électrique, ce par quoi une force de freinage est produite sur la roue (6);
- pour au moins une roue (16) du véhicule à moteur, un frein électrique d'immobilisation (28) qui sert à immobiliser le dispositif de serrage (20, 22) du moteur électrique (18) associé à la roue (16) et qui, dans un premier état où le courant passe, autorise, sans le contrarier, le mouvement du dispositif de serrage (20, 22) et, dans un second état, où le courant ne passe pas, conduit à un auto-blocage du dispositif de serrage (20, 22),
selon les pas de procédé suivants:
a) exercer sur au moins une roue (16) du véhicule à moteur une force de freinage en produisant une force de serrage définie sur le frein correspondant (12), le frein électrique d'immobilisation (28) associé à la roue se trouvant alors dans le premier état, où le courant passe
b) faire passer le frein électrique d'immobilisation (28) dans le second état, où le courant ne passe pas, de sorte qu'un frottement accru s'exerce sur le dispositif de serrage (20, 22) aussi longtemps que l'on ne fait pas repasser le frein électrique d'immobilisation (28) dans le premier état, où le courant passe, ce par quoi la force de serrage produite dans le pas de procédé (a) subsiste essentiellement et la roue (16) est immobilisée.

6. Procédé d'immobilisation d'une installation électrique de freinage pour un véhicule à moteur selon la revendication 5, caractérisé par le fait que c'est en manoeuvrant la pédale de frein (2) que l'on exerce une force de freinage sur la roue (16) du véhicule à moteur à immobiliser.

7. Procédé d'immobilisation d'une installation électrique de freinage pour un véhicule à moteur selon l'une des revendications 5 à 6, caractérisé par le fait que le passage du frein électrique d'immobilisation (28) dans le second état, où le courant ne passe pas, se fait de préférence automatiquement lors de l'arrêt du moteur du véhicule à moteur.
